# EUROPEAN PATENT APPLICATION

(11) **EP 1 986 300 A2**
(43) Date of publication of application: **29.10.2008**
(21) Application number: 08154824.0
(22) Date of filing: 18.04.2008
(51) Int. Cl.: H02G 3/38, H02G 3/12

(54) **Box assembly for electric wirings in floors**

(30) Priority: 25.04.2007 NL 1033748
(71) Applicant: ABB B.V., 6716 AA Ede (NL)
(72) Inventor: Witte, Adriaan Marinus, 3436 HT, NIEUWEGEIN (NL)
(74) Representative: De Hoop, Eric

(57) **Abstract**

Box assembly for electric wirings, comprising a box, particularly a distribution junction box, having a circumferential wall defining a cavity for electric connections that is provided with a centre line, and at least one anchoring member, which anchoring member is arranged at or can be arranged on the box and is made of manually plastically bendable material for bending from a position relatively offset with respect to the centre line to a position that is relatively extended with respect to the centre line.

## Description

### BACKGROUND OF THE INVENTION

The invention relates to a box assembly for electric wirings in (ceiling) floors.

An example of such a box for electric wirings is a distribution junction box provided with a cavity, which box at an end situated below once having been placed, forms a large opening for access for installation activities from the lower side of the floor, such as arranging wire connections in the cavity, and which is provided with a number of spouts which once having been placed are accessible from the upper side of the floor for connection of one or more installation pipes intended for passing the wires through to the cavity.

At the edge the large opening is usually provided with metal nut members for bolts for attaching electric components.

Such distribution junction boxes are usually placed in concrete floors. They may consist of prefab elements, such as in particular so-called hollow core slabs.

In case of prefabrication the distribution junction box can be placed in the hollow core slab, to which end a hole is left open in the concrete when the concrete is still soft and the box is placed in said hole. The space between the hole and the box is subsequently filled with concrete. Alternatively the box is not placed in the construction project until after the hollow core slab has been placed, to which end the electrician has a hole drilled at the wanted location. After the box has been placed in the hole, the hole is buttered/filled with mortar when the hole is (too) wide. In other cases exterior clamping ribs of the box are able to keep the box clamped in the hole. In a later operational step, after the desired pipes have been laid out on the upper surface of the floor, a covering layer of concrete will be poured onto the said floor.

The components to be accommodated in a distribution junction box are often intended for lighting. As a result of the heat emission of the fixture of the lighting, the synthetic material of the box will expand. After switching off the light the material will shrink again when cooling off. This movement of the box material may result in the box getting detached from the surrounding mortar. When the box is clamped in the hole by means of ribs, the clamping action may be unacceptably reduced as a result of weakening of the material of the ribs due to heating. In the end the box, particularly when the suspended lighting is of great weight (for instance a chandelier), can move downward in the hole and even get detached, causing danger and damage.

### SUMMARY OF THE INVENTION

It is an object of the invention to improve on this.

From one aspect the invention provides a box assembly for electric wirings, comprising a box, particularly a distribution junction box, having a circumferential wall defining a cavity for electric connections that is provided with a centre line, and at least one anchoring member, which anchoring member is arranged at or can be arranged on the box and is made of manually plastically bendable material for bending from a position relatively offset with respect to the centre line to a position that is relatively extended or projecting with respect to the centre line.

In this way the box, provided with the anchoring member, can easily be placed in a hole in a prefab concrete slab, subsequently be secured therein, using said mortar or just by clamping, and then the anchoring member can be brought in the extended position in order to extend over the upper surface of the concrete slab. Said portion of the anchoring member can be accommodated in a layer of concrete that is to be poured later on, the so-called covering floor, in which usually installation pipes, particularly those connecting to the box in question, and local mid-span reinforcement is accommodated. Optionally the anchoring member can be additionally attached to an installation pipe or reinforcement, should there be one for other reasons. Should after a while the box become detached from the mortar surrounding it, or because of the clamping ribs weakening, the anchoring member will ensure that the box remains in the hole.

Preferably the anchoring member is bendable in an orientation that is oriented transverse to the centre line.

In one simple embodiment the anchoring member is made of wire-shaped material. In a further embodiment said wire-shaped material can be bendable in several directions that are at an angle deviating from 180 degrees.

Bending or bending out is facilitated when the anchoring member is provided with pre-bent sections.

When the anchoring member has a bracket shape a larger effective length can be obtained when bending out.

The anchoring member can be provided with predetermined bending locations. Their position may for instance be attuned to the location of the upper surface of the prefab concrete slab in which the box is placed.

Assembling is facilitated when the anchoring member can be snapped fixed onto the box, particularly onto its circumferential wall.

The box assembly may comprise several anchoring members that preferably are integrally formed with each other, in which case assembling is made easier.

In one embodiment the anchoring member prior to use is situated substantially within the circumferential profile of the box, at least considered in a projection on a plane perpendicular to the centre line. In that case the anchoring member in the direction of the centre line can at least partially project from an upper end of the box. When the lower end of the box that is opposite the upper end is open and the cavity is dimensioned there for accommodation of the anchoring member of an identical consecutive box assembly, of which said anchoring member projects from the upper end, the box assemblies according to the invention can be nested in series.

In one embodiment at the upper side the box is provided with a number of spouts extending substantially parallel to the centre line, wherein the spouts in longitudinal direction are divided into an upper, broader spout portion and a narrower spout portion situated below it, wherein the anchoring member is placed with a flange or flange member that is integrally formed against and below the box and extends in circumferential direction of the box, wherein the flange or flange member is situated at the location of the transition from the broader spout portions to the narrower spout portions.

In one embodiment the anchoring member is pre-installed on the box. In that case the electrician only needs to bend the anchoring member to the extended position.

According to a further aspect the invention provides a method for placing a box for electric wirings in a prefab concrete floor, wherein the box is provided with at least one anchoring member, which anchoring member is made of manually plastically bendable material for bending into an orientation that is oriented transverse to the centre line, wherein a hole is made in the floor, the box is inserted therein, the anchoring member is bent out into the transverse orientation in order to be placed on the upper surface of the concrete floor, and a covering floor is poured onto the concrete floor.

The box assembly used in this method can be provided with several anchoring members, wherein the anchoring members are bent out in several orientations transverse to the centre line.

According to the method the anchoring member may have a predetermined bending location that is situated at a distance from the lower end of the box, which distance at least substantially corresponds with the thickness of the concrete floor. Optionally several predetermined bending locations can be provided for attuning to floors of various standard thicknesses.

It is noted that the applicant is known for suspending a distribution junction box, using a separate, individually supplied rigid double hook, from reinforcement to be additionally arranged on the floor. Said hook is not easy to bend, and if so only by using tools. Placement is laborious.

From a further aspect the invention provides a distribution junction box for electric wirings, for accommodation in a floor, having a circumferential wall defining a cavity for electric connections that is provided with a centre line, wherein at a lower side the box is provided with an opening for access to the cavity for placing components and at the opposite upper side is provided with a number of spouts extending substantially parallel to the centre line, wherein the spouts in longitudinal direction are divided into an upper, broader spout portion and a narrower spout portion situated below it. Preferably the respective broader and narrower spout portions are situated in series and concentrically with each other.

The aspects and measures described in this description and the claims of the application and/or shown in the drawings of this application, may where possible also be used individually. Said individual aspects and other aspects may be the subject of divisional patent applications relating thereto. This particularly applies to the measures and aspects that are described per se in the sub claims.

### SHORT DESCRIPTION OF THE DRAWINGS

The invention will be elucidated on the basis of an exemplary embodiment shown in the attached drawings, in which:
Figure 1 shows a box designed for a box assembly according to the invention;
Figure 2A shows the box assembly according to figure 1, shown sideways from above;
Figure 2B shows the box assembly of figure 2A, shown sideways from an opposite side (bottom side);
Figures 3A-C show the box assembly of figures 2A, 2B in consecutive stages of installation; and
Figure 4 shows an axial cross-section of the box of the previous figures.

### DETAILED DESCRIPTION OF THE DRAWINGS

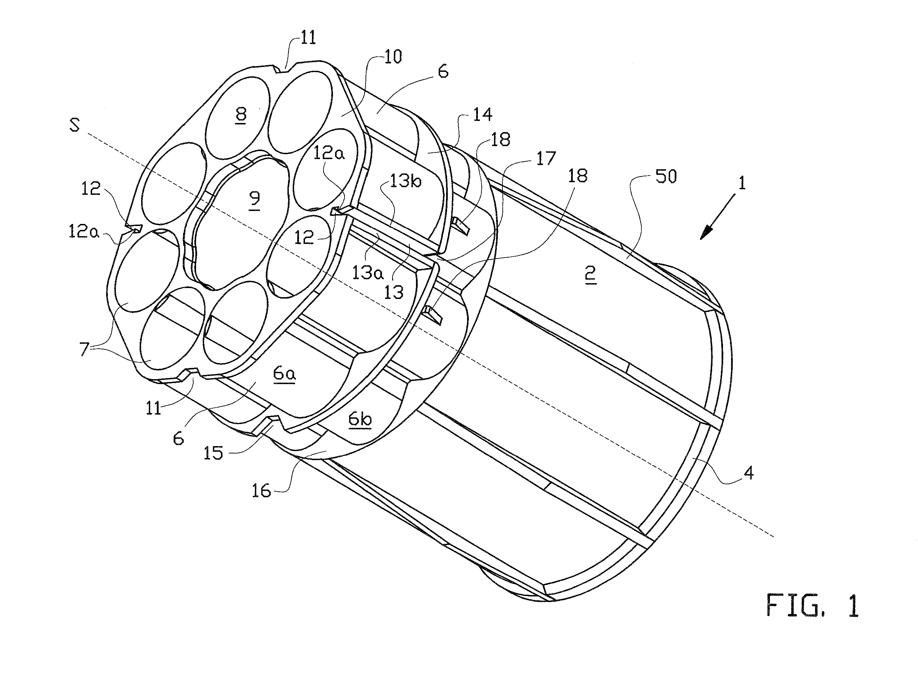

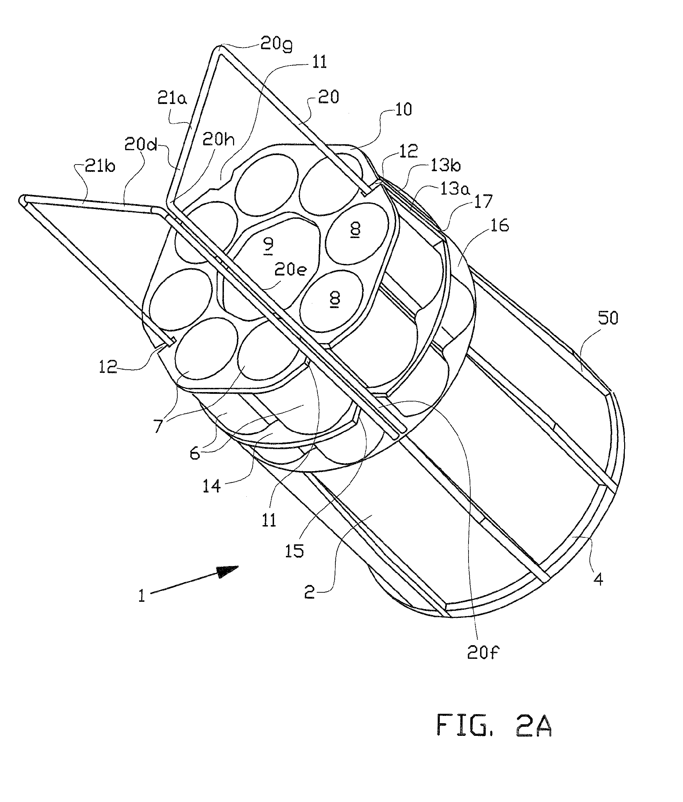

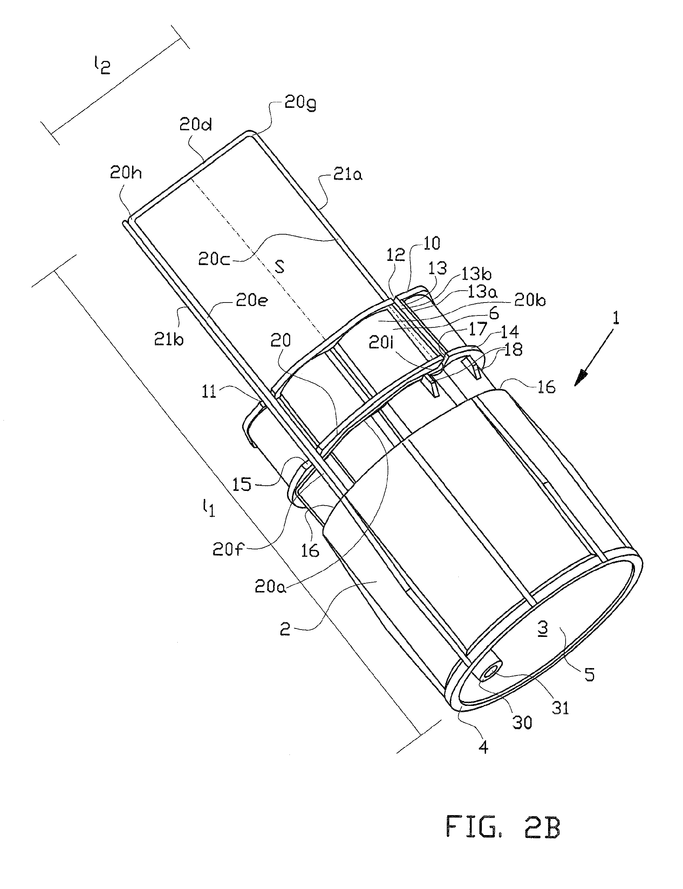

The distribution junction box 1 shown in figures 1, 2A, 2B has been made by injection moulding a suitable synthetic material such as polypropene copolymer. The distribution junction box 1 is substantially cylindrical, having a centre line S, with a portion defined by a circumferential wall 2 having a circular cross-section, surrounding a cavity 3. At the bottom side, which becomes the mounting side, the circular end edge 4 surrounds an opening 5. At the opposite side a number of parallel spouts 6 have been formed that are perpendicular to the opening 5, wherein at the location of the transition between the spouts 6 and the circumferential wall 2 a first transverse wall 16 has been formed. At the location of the spouts 6 the first transverse wall 16 is open, so that the inner side of the spouts 6 is in open connection with the cavity 3. At the upper end facing away from the mounting side the spouts 6 form end edges 7, that define openings 8 and are part of a second end- or transverse wall 10. There is a low recess 9 in the centre of the second wall 10. At the outer circumference of the wall 2 a number of clamping ribs 50 have been integrally formed.

A flange-shaped ring 14 has been formed between the second transverse wall 10 and the first transverse wall 16, which ring functions as abutment or shoulder ring, as will be discussed below.

At the edge the second transverse wall 10 is provided with notches or recesses 11, 11 and 12, 12, each time positioned diametrically opposite each other, and the flange edge 14 is provided with recesses 15 situated in line with recesses 11, and with recesses 17 that are also situated in line with recesses 12. Between the slit-shaped recesses 12 and 17, ducts 13 have been formed that are accessible from aside, bounded by integrally formed partitions 13a, 13b extending between the edge of the second transverse wall 10 and the flange wall 14. Just below the flange wall 14 a number (see figures 1 and 2B) cams 18 have been integrally formed on the circumferential wall 2.

As can be seen in figures 2A,B a wire 20 (made of galvanised steel) forming two brackets 21 a, 21 b has been arranged on the box 1. The wire 20 is bent at a number of locations, at the locations 20i, 20g and 20h at 90°. At the bottom side of the flange edge 14 there is a portion 20a, extending between the bottom entrances 1 7 of two ducts 13 that are positioned diametrically opposite each other. At that location the wire is bent at 90° at the two bending points 20i, and with portions 20b runs through ducts 13. The wire 20 then extends through recesses 12, and with upright portion 20c, extending parallel to centre line S of the box 1, above it up to the 90°-bending point 20g. At that location transverse portion 20d starts that is parallel to the transverse wall 10. At point 20h the wire is bent again at 90° to downward portion 20e, extending through recess 11 and in the valley between two adjacent spouts 6, through recess 15 with portion 20f up to the first transverse wall 16. Wire portion 20a is snapped fixed onto the box 1 between the cams 18 and the flange edge 14 and wire portion 20b is secured in the duct 13 by hook cam 12a in slot-shaped recesses 12. In that way a preformed double bracket 21 a,b can easily be placed on the box 1 and be secured thereto. The width 12 of brackets 21 a,b is such so as to be accommodated in the cavity 3, via opening 5.

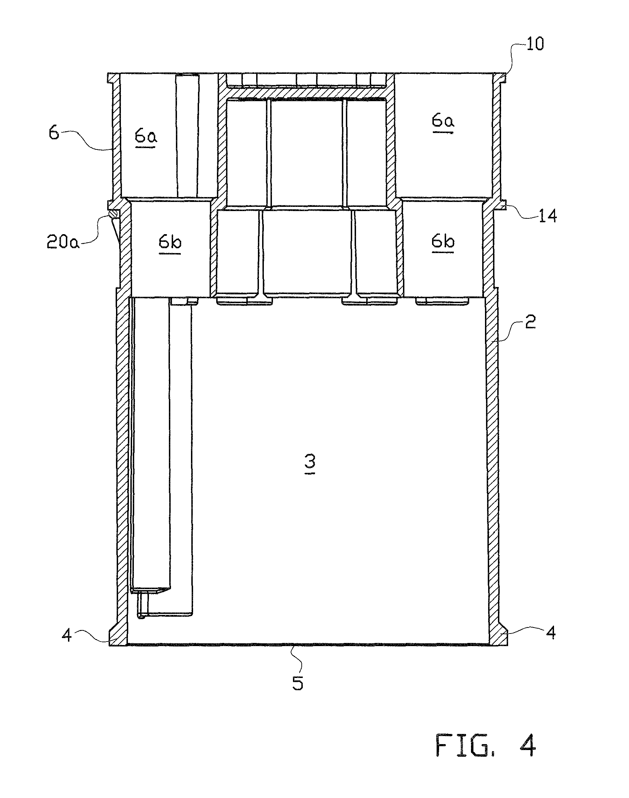

The flange-shaped ring 14 is situated at a location where the spouts 6 are divided in longitudinal direction into an upper, broad spout portion 6a (for instance for 19 mm pipes) and a lowermost, narrower spout portion 6b (for instance for 16 mm pipes) that is situated concentrically in line therewith. Because the outer wall of he narrower spouts 6b is situated slightly more inward than the outer wall of the broader spouts 6a, an advantageous space for wire portion 20a is created below the flange-shaped ring 14, see figure 4.

As can be seen in figure 2B, at the mounting side a little bush 30 is integrally formed in the cavity 3, in which cavity a nut member 31 is accommodated, in this case a bush with internal thread, in which an attachment bolt can be screwed for attaching an electric component such as a lighting fixture, onto the distribution junction box 1.

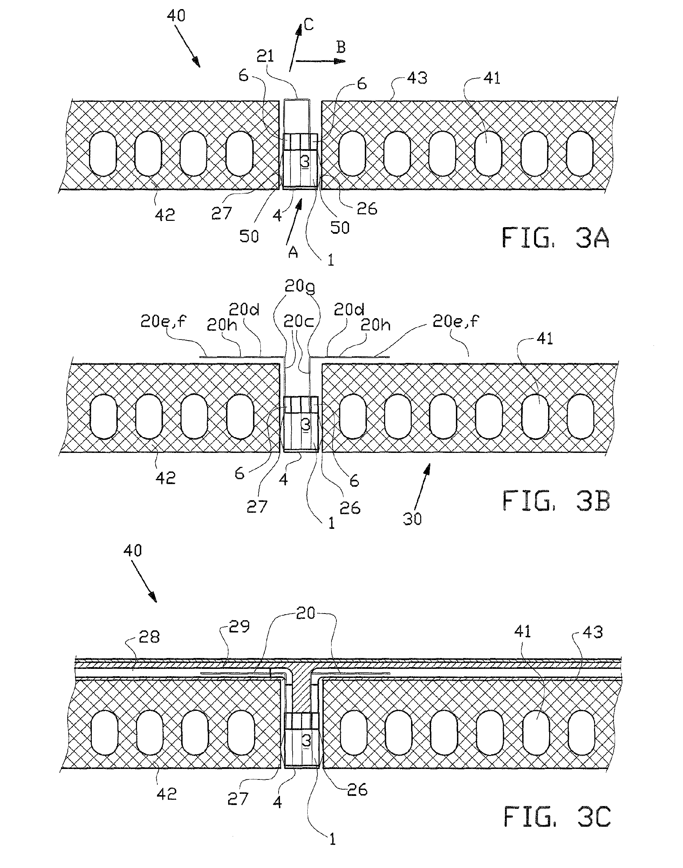

Figure 3A shows the situation after the box 1 has been placed in a so-called (prefab) hollow core slab 40. The hollow core slab 40 has been provided with hollow cores 41 in the known manner and has a bottom surface 42 and an upper surface 43, onto which later on a covering floor will be poured. After placing the hollow core slab 40 in the construction project at the wanted location, if so desired adapted to the latest wishes of the users of the building to be built, a diamond head drill or something similar is used to drill a continuous hole 26 in the hollow core slab 40. Subsequently the distribution junction box 1 is inserted into the hole 26 (from below, direction A), with the brackets 21 a, b upwards, and mortar 27 is applied between the circumferential wall 2 and the wall of the hole 26 when the hole is rather broad. The mortar can otherwise be dispensed with and the box will remain in the hole 26 due to clamping of the ribs 50 against the hole wall.

As can be seen in figure 3A the overall height 11 of the box 1 is attuned to the thickness of the hollow core slab 40, so that the wire 20 does not extend above the upper surface 43 of the hollow core slab 40. As a result it is also possible to arrange the distribution junction boxes already when manufacturing the hollow core slab 40, and subsequently, accommodated in the hollow core slabs, transport them to the construction project, without damaging the wire 20.

After the mortar 27 has hardened the electrician, standing on the upper surface 43 of the hollow core slab 40, will be able to manually take hold of the wire portion 20d, and then pull in direction C, in which way wire portions 20e and 20f can be pulled up out of the hole 26, wherein bending about 20g can take place. The wire portion 20b then remains held in duct 13.

At the location of 20g the wire 20 itself can be bent to the other side (direction B) at an angle of 90° to portion 20c, optionally to extend radially from the upper end away from portion 20c, outward, from the centre line S. The material of the wire 20 may follow a twist about its own centre line. Said actions are performed for both brackets 21 a, 21 b until the situation of figure 3B is achieved, in which the free wire portions extend at a small distance over the upper surface 43, away from the hole 26.

Subsequently the electrician introduces an end of a respective installation pipe 32 in one or more of the spouts 6, which pipe via a bend changes into a horizontal installation pipe, leading to a connection point that is not further shown.

After the installation activities on the rough hollow core slab 40 have been completed, a ball of glasswool can be placed on the box 1 and the floor can be finished with a covering layer 28, which embeds the anchoring wire portions 20c,d,e,f and the installation pipes 32. The concrete of the covering layer after hardening retains the anchoring wires 20 due to adhesion, so that the distribution junction box 1 remains firmly attached to the hollow core slab 40, also when the adhesion between box wall 2 and the mortar 27 considerably deteriorates or the clamping action of the ribs 50 decreases as a result of heating of the rib material.

On the upper surface 29 of the covering layer 28 another layer can subsequently be applied, for instance in the form of floor covering.

The above description is included to illustrate the operation of exemplary embodiments of the invention and not to limit the scope of the invention. Starting from the above explanation many variations that fall within the spirit and scope of the present invention will be evident to an expert.

## Claims

1. Box assembly for electric wirings, comprising a box, particularly a distribution junction box, having a circumferential wall defining a cavity for electric connections that is provided with a centre line, and at least one anchoring member, which anchoring member is arranged at or can be arranged on the box and is made of manually plastically bendable material for bending from a position relatively offset with respect to the centre line to a position that is relatively extended or projecting with respect to the centre line, preferably in an orientation that is oriented transverse to the centre line.

2. Box assembly according to claim 1, wherein the' anchoring member is made of wire-shaped material, wherein the anchoring member preferably is provided with pre-bent sections.

3. Box assembly according to claim 2, wherein the anchoring member has a bracket shape.

4. Box assembly according to claim 2 or 3, wherein the anchoring member is provided with predetermined bending locations.

5. Box assembly according to any one of the claims 2-4, wherein the wire-shaped material is bendable in several directions that are at an angle deviating from 180 degrees.

6. Box assembly according to any one of the preceding claims, wherein the anchoring member can be snapped fixed onto the box, particularly onto its circumferential wall.

7. Box assembly according to any one of the preceding claims, provided with several anchoring members that are integrally formed with each other.

8. Box assembly according to any one of the preceding claims, wherein the anchoring member prior to use is situated substantially within the circumferential profile of the box, at least considered in a projection on a plane perpendicular to the centre line, wherein preferably the anchoring member in the direction of the centre line at least partially projects from an upper end of the box.

9. Box assembly according to claim 8, wherein the lower end of the box that is opposite the upper end is open and the cavity is dimensioned there for accommodation of the anchoring member of an identical consecutive box assembly, of which said anchoring member projects from the upper end.

10. Box assembly according to any one of the preceding claims, wherein at the upper side the box is provided with a number of spouts extending substantially parallel to the centre line, wherein the spouts in longitudinal direction are divided into an upper, broader spout portion and a narrower spout portion situated below it, wherein the anchoring member is placed with a flange or flange member that is integrally formed against and below the box and extends in circumferential direction of the box, wherein the flange or flange member is situated at the location of the transition from the broader spout portions to the narrower spout portions.

11. Box assembly according to any one of the preceding claims, wherein the anchoring member is pre-installed on the box.

12. Method for placing a box for electric wirings in a prefab concrete floor, wherein the box is provided with at least one anchoring member, which anchoring member is made of manually plastically bendable material for bending into an orientation that is oriented transverse to the centre line wherein a hole is made in the floor, the box is inserted therein, the anchoring member is bent out into the transverse orientation in order to be placed on the upper surface of the concrete floor, and a covering floor is poured onto the concrete floor, wherein the box assembly preferably is provided with several anchoring members, wherein the anchoring members are bent out in several orientations transverse to the centre line.

13. Method according to claim 12, wherein the anchoring member has a predetermined bending location that is situated at a distance from the lower end of the box, which distance at least substantially corresponds with the thickness of the concrete floor.

14. Method according to claim 12 or 13, wherein use is made of a box assembly according to any one of the claims 1-13.

15. Distribution junction box for electric wirings, for accommodation in a floor, having a circumferential wall defining a cavity for electric connections that is provided with a centre line, wherein at a lower side the box is provided with an opening for access to the cavity for placing components and at the opposite upper side is provided with a number of spouts extending substantially parallel to the centre line, wherein the spouts in longitudinal direction are divided into an upper broader spout portion and a narrower spout portion situated below it, wherein the respective broader and narrower spout portions preferably are situated in series and concentrically with each other.
